(19) Europäisches Patentamt
European Patent Office
Office européen des brevets

(11) **EP 2 855 609 B1**

(12) **EUROPEAN PATENT SPECIFICATION**

(45) Date of publication and mention
of the grant of the patent:
**02.05.2018  Bulletin 2018/18**

(21) Application number: **13796702.2**

(22) Date of filing: **31.05.2013**

(51) Int Cl.:
*C09D 103/00* (2006.01)          *C09D 101/00* (2006.01)
*C09D 105/00* (2006.01)          *C09D 199/00* (2006.01)
*D21H 19/12* (2006.01)           *B32B 23/06* (2006.01)
*D21H 17/24* (2006.01)           *D21H 17/28* (2006.01)
*B65D 65/42* (2006.01)           *D21H 19/54* (2006.01)

(86) International application number:
**PCT/SE2013/050639**

(87) International publication number:
**WO 2013/180643 (05.12.2013 Gazette 2013/49)**

(54) **A FIBER-BASED SUBSTRATE PROVIDED WITH A COATING BASED ON BIOPOLYMER MATERIAL AND A METHOD OF PRODUCING IT**

SUBSTRAT AUF FASERBASIS MIT EINER UMHÜLLUNG AUF BASIS EINES BIOPOLYMERWERKSTOFFS UND VERFAHREN ZU SEINER HERSTELLUNG

SUBSTRAT À BASE DE FIBRES COMPRENANT UN REVÊTEMENT À BASE DE MATIÈRE DE BIOPOLYMÈRE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2012  SE 1250568**

(43) Date of publication of application:
**08.04.2015  Bulletin 2015/15**

(73) Proprietor: **Lantmännen ek för
104 25 Stockholm (SE)**

(72) Inventors:
 • **JOHANSSON, Caisa
   652 27 Karlstad (SE)**
 • **JÄRNSTRÖM, Lars
   756 44 Uppsala (SE)**
 • **KOCH, Kristine
   756 43 Uppsala (SE)**
 • **MENZEL, Carolin
   09648 Mittweida (DE)**
 • **OLSSON, Erik
   656 33 Karlstad (SE)**
 • **ANDERSSON, Roger
   752 19 Uppsala (SE)**

(74) Representative: **Johansson, Lars E.
   Hynell Patenttjänst AB
   P.O. Box 138
   683 23 Hagfors (SE)**

(56) References cited:
**EP-A1- 2 108 676          WO-A1-02/08517
WO-A1-2009/121926      JP-A- 2010 144 279
US-A1- 2005 208 009    US-A1- 2006 252 855
US-B1- 6 670 470**

**Description**

TECHNICAL FIELD

The present invention relates to a coated product, comprising a substrate and a coating layer, wherein said substrate is in shape of a web, sheet or tray of fiber-based material such as paper or paperboard, and wherein said coating layer forms a barrier on the substrate and mainly contains biopolymer material cross-linked by a cross-linking agent.

It also relates to a method of making a coated product, comprising:

a) providing a substrate in shape of a web, sheet or tray of fiber-based material such as paper or paperboard;
b) providing a coating material in form of biopolymer-containing aqueous dispersion or solution cross-linked by a cross-linking agent; and
c) applying the coating material on the substrate to form a coating layer thereon.

BACKGROUND ART

Coated paper and paperboard are being increasingly used in the food packaging industry. Earlier the coatings were based on petroleum products, but in order to reduce the consumption of petroleum products and emissions of products that are detrimental to the environment, much research has been carried out to find acceptable substitutes. For coatings on paper and paperboard, coating with solutions or dispersions based on polysaccharides such as starch and hemicellulose have given promising results, but it has proved difficult to achieve coatings that have a sufficient barrier effect against transmission of gases such as water vapor and/or oxygen at relative humidity > 50 % or when the coatings have been applied to paper at industrial conditions such as high machine speeds and limited drying capacity.

In addition, coating layers produced from pure starch are brittle and difficult to handle and hence need a plasticizer such as glycerol (GLY), PEG or sorbitol. The addition of plasticizer may decrease the permeability of the coating since a less brittle layer may possess fewer cracks and other defects, but the opposite effect on permeability has also been observed. The plasticizer works by lowering the glass transition temperature ($T_g$), in most cases to be lower than ambient temperature. In the rubbery state, the free volume of the polymer is higher than in the glassy state, leading to higher free volume if $T>T_g$. High free volume promotes high permeability. Hitherto, one way of getting a sufficient barrier effect has been to include particulate pigments, such as calcium carbonate, kaolin, montmorillonite, vermiculite, titanium dioxide, gypsum, talc, etc., or to include fibrous fillers such as micro- or nano-fibrillar cellulose in the coating color. In addition a cross-linking agent may be added to cross-link the polysaccharide solution or the polysaccharide-containing coating color in order to prevent water-uptake in the coating layer at high relative humidity. Water works as an additional plasticizer for starch and an increased water content in the coating layer have been shown to reduce the barrier properties significantly.

When the barrier functionality is used in food packaging applications, special concerns have to be taken into account. Consumers buying the packed food may have misgivings concerning the toxicity of chemicals used in the coating such as cross-linkers and catalysts and the risk of toxic products leaking out into the food from coatings based on formulations where nano materials or synthetic polymers are used. Cross-linkers for starches approved as food additives are normally developed in order to thicken the starch solution by creating a polymer gel, e.g. adipic anhydride in combination with acetic anhydride. Such cross-linking agents may significantly increase the viscosity of the gelatinized starch, limiting the dry solids content of the coating color which limits the maximum coating layer thickness in industrial applications.

Many of the conventional cross-linkers for starch like glutaraldehyde and glyoxal are toxic and/or not approved for direct contact with food. For other chemicals for cross-linking polysaccharides such as different polycarboxylic acids, there is a belief that a catalyst such as sodium hypophosphite, phosphate or bentonites ion exchanged with high valence cations such as calcium, aluminum, and titanium are needed to cross-link starch or other polysaccharides. All these concepts mentioned so far have drawbacks such as non-food approval or that they are resulting in poor runnability in industrial coating (e.g. too high viscosity).

Coatings based on aqueous solutions of polymer or from dispersions based on aqueous polymer solutions are difficult to perform in industrial scale. Industrial conditions can be tested in pilot trials. There is a delicate balance between machine speed and drying strategy in industrial conditions in order to produce paper reels or piles without blocking and no blistering. Too harsh drying may cause blistering while too gentle drying may cause blocking. This balance is even more difficult to achieve when a temperature-induced cross-linking reaction has to take place. In industrial conditions the drying kinetics differs substantially from those existing in laboratory-scaled trials. The rapid evaporation of water and the short time between application (or onset of drying) to the final immobilization point is very much shorter in pilot trials than in laboratory-scaled coating experiments. Also, the time at the elevated temperatures which is needed to achieve cross-linking is much shorter in a pilot scale trial compared to the lab-scale. Also the temperatures during drying that are possible to achieve in a pilot scale trial are significantly lower than what is possible at the lab-scale. Problems such as foaming, air entrapment and formation of deposits may also be more severe at pilot trials than at laboratory-scaled experiments. The number of pinholes and other coating defects are generally much higher at pilot coating than at laboratory coating. In many cases of barrier dispersion coating, it has been necessary to coat the web twice to get the desired barrier effect in laboratory-scaled experiments. Industrial coating or pilot coating may require three or more layers in order avoid effects of pinholes or other defects.

The need for multiple coating applications with drying in between in several current state-of-the art bio-based techniques is also a consequence of the low solids content of these concepts. It has not before been described in literature a process window that make it possible to produce barrier coatings based on solutions or dispersions of polysaccharides with non-toxic cross-linkers, such as citric acid.

The effect of citric acid on the barrier properties of starch-based edible films has been studied a lot, without finding any suitable industrially applicable process window. In one study by Ghanbarzadeh et al., *vide* Ghanbarzade B, Almasi H, and Entezami A A: "Improving the barrier and mechanical properties of corn starch-based edible films; Effects of citric acid and carboxymethyl cellulose", Industrial Crops and Products 33 (2011) p 229-235, it is concluded that multi-carboxyl structure of citric acid under certain conditions could induce interaction between citric acid and starch, which in turn could improve the barrier properties, moisture absorption, solubility of films, and ultimate tensile strength of the resulted films. However, it teaches that increasing citric acid content will cause an increase in chain mobility, interchain spaces and voids due to inclusion of residual-free citric acid molecules between the polymer chains, which in turn promotes the water vapor transmission and reduces the values of ultimate tensile strength. The general teaching is that any obtained increase in barrier properties is small.

It has been previously shown that different polycarboxylic acids such as *all-cis*-1,2,3,4-Butanetetracarboxylic acid (BTCA) or Citric acid with Sodium hypophosphite catalysts could be used to cross-link polysaccharides, in this case cotton for textile usages. Eugene J. Blanchard, Robert M. Reinhardt, Elena E. Graves, and B. A. Kottes Andrews Dyeable Cross-Linked Cellulose from Low Formaldehyde and Non-Formaldehyde Finishing Systems? Ind. Eng. Chem. Res. 1994,33, 1030-1034. Or Cellulose /paper Daniel F. Caufield, Ester crosslinking to improve wet performance of paper using multifunctional carboxylic acids, butanetetracarboxylic and citric acid, Vol. 77, No. 3 Tappi Journal 1994. It was also seen that it was possible to crosslink with BTCA and citric acid with Chloroacetate as a catalyst and without catalysts on cotton. B. A. Kottes Andrews Chloroacetate Catalysis of Esterification Cross-Link Finishing of Cotton Fabrics for Durable Press Ind. Eng. Chem. Res. 1996, 35, 2395-2398. Poly (maleic acid), (PMA), and BCTA with and without sodium hypophosphite as a catalyst between 110-200°C for 2 min were used to crosslink paper, no crosslinking occurred under 130°C with PMA and under 110°C with catalyst Charles Q. Yang, Yufeng Xu and Dengjin Wang, FTIR Spectroscopy Study of the polycarboxylic acids used for Paper wet strength improvement, Ind. Eng. Chem. Res. 1996, 35, 4037-4042. These articles show that poly carboxylic acids such as Citric acid can be used to cross-link polysaccharides such as paper and cotton at short curing time 1,5-3min. But in these articles the temperature span was in the range of 110-200°C which is significantly higher than what would be occurring in normal paper coating.

It has been shown that a small addition of Citric acid to Glycerol starch films decreased the water sorption at high relative humidity, Yu Jiugao, Wang Ning, Ma Xiaofei, The Effects of Citric Acid on the Properties of Thermoplastic Starch Plasticized by Glycerol, Starch/Stärke 57 (2005) 494-504. But in this article, the amount of citric acid was less than 3pph, the starch was extruded and the temperature was in the range of 130-150 °C. Neither cross-linking nor barrier properties were measured. The used temperature range is above a range that normally is desired in an industrial process. Also US2006025855 presents a process that teaches use of temperatures within that undesired temperature range. Furthermore this latter document relates to sizing not coating.

It has been shown that Citric acid both hydrolyze and esterify thermoplastic starch prepared by melt blending at 130 °C Rui Shi, Zizheng Zhang, Quanyong Liu, Yanming Han, Liqun Zhang, Dafu Chen, Wei Tian, Characterization of citric acid/glycerol co-plasticized thermoplastic starch prepared by melt blending, Carbohydrate Polymers 69 (2007) 748-755. In this article, no barrier properties were examined and the temperature was high.

It has been shown that the addition of citric acid and cross-linking could reduce the WVTR of starch films Narendra Reddy, Yiqi Yang, Citric acid cross-linking of starch films, Food Chemistry 118 (2010) 702-711. However, the reduction was small, and from a high level 800 to 750 g/m$^2$ 24h. These high WVTR values are not even close to what has been shown in this patent. Also, the curing temperature of the starch films, 165 °C for 3-5 minutes which is a temperature you normally don't achieve in industrial paper coating.

It is well known that by gelatinizing starch in the presence of acids such as citric acid or acetic acid hydrolysis occurs, even if the pH is adjusted to values as high as 4, T. Yamada, Y. Morimoto and M. Hisamatsu, Tsu, Effect of Citric Acid on Potato Starch Gelatinization, starch/starke 38 (1986) Nr. 8, S. 264-268.This article does not tell at which pH the hydrolysis stops. For cornstarch however, hydrolysis during gelatinization occurs up to about pH 4, Madoka Hirashima, Rheo Takahshi, and Katsuyoshi Nishinari, Effects of Citric Acid on the Viscoelasticity of Cornstarch Pastes, J. Agric. Food Chem. 2004, 52, 2929-2933. Also US 2005208009 presents a similar teaching. These documents describe how starch gelatinization is affected by Citric Acid and pH, however it does not describe how to produce a starch based coating with minimized hydrolysis.

Different polycarboxylic acids such as Citric Acid, Maleic Acid, Tartaric acid, Malonic Acid, Succinic acid, Glutaric acid, Adipic acid have been used to cross-link starch in order to produce swellable hydrogels Christian Seidel, Werner-Michael Kulicke, Christoph Heß, Brigitte Hartmann, M. Dieter Lechner, Waldemar Lazik, Influence of the cross-linking agent on the gel structure of Starch Derivates, Starch/Stärke 53 (2001) 305-310. However, the amount of acid used in this article, 5pph is significantly lower than what is used in this patent. The time for reaction to occur, 25 min and the reaction temperature 140 °C are much higher and longer than what would be possible for an industrial paper coating. The usage described for the cross-linked starch in this article is also completely different compared to the patent, they describe a method to produce a gel which should be used to take up water.

For solution cast blends of starch and poly (vinyl alcohol) it could be seen that increased amount of citric acid reduces the equilibrium water content Rui Shi, Jingliang Bi, Zizheng Zhang, Aichen Zhu, Dafu Chen, Xinhua Zhou, Liqun Zhang, Wei Tian, The effect of citric acid on the structural properties and cytotoxicity of the polyvinyl alcohol/Starch films when molding at high temperature, Carbohydrate Polymers 74 (2008) 763-770. However, in this article the drying temperature was very high, 140 °C and the drying time was long, 1h. Starch granules can have citrate esters incorporated or be crosslinked by Citric acid at different pH with and without catalysts (sodium dihydrogen phosphate) at reaction temperatures between 110°C -140°C and 24h Robert E. Wing, Starch Citrate: Preparation and Ion Exchange properties Starch/Starke 48 (1996) Nr. 7/8. S. 275-279. The reaction temperature in this article is high, the reaction time is long and the material is used in solution for its ion exchange properties, i.e. its capacity to make complexes with divalent ions.

It has been shown that Citric acid can be used as a cross-linker on starch to produce resistant starch (Starch that can't be degraded in the stomach) by adding 40 pph Citric acid and drying at 5h, Beatrix Wepner, Emmerich Berghofer, Ella Miesenberger, Karl Tiefenbacher, Korneuburg, Perry N. K. Ng, Citrate starch - Application as resistant starch in different food applications, Starch/Stärke 51 (1999) Nr. 10, S. 354-361. In another study the same amount of citric acid was used but the reaction times and temperatures were varied, temperatures between 120-150°C and times between 3-9h produced cross-linked starches that were at least partially resistant to digestion, Xueju (Sherry) Xie, Qiang Liu, Development and Physicochemical Characterization of New Resistant Citrate Starch from Different Corn Starches, Starch/Stärke 56 (2004) 364-370. Both these articles show that starch can be cross-linked by citric acid, but the times used are very long and the temperatures used are high. The application, non digestible starch is also very far from barrier coatings.

Citric acid crosslinking with up to 15wt % citric acid was used to crosslink cellulose derivatives, T=190 °C, 15min. This resulted in a reduction of WVTR, V. Coma, I. Sebtia, P. Pardon, F.H. Pichavant, A. Deschamps Film properties from cross-linking of cellulosic derivates with a polyfuncional carboxylic acid, Carbohydrate Polymers 51 (2003) 265-271. However the reduction in WVTR was quite small and their best WVTR, 23°C, 50 %RH was almost 30 higher times higher than what is described in the patent. Also the drying temperature was very high and the drying time was very long.

The reduced swelling in aqueous media of free starch films or starch powders cross-linked with polyfunctional organic acids such as adipic acid, succinic acid and citric acid (CA), compared to swelling of films made of native starches, has been reported in a numbers of studies. See e.g. Fa-xing Luo, Qiang Huang, Xiong Fu, Le-xing Zhang, Shu-juan Yu; "Preparation and characterisation of crosslinked waxy potato starch", Food Chemistry 115 (2009) 563-568 where the crosslinking reaction took place in the starch slurry (and not in the film).

There also exist numerous patents related to the one or some of the aspects mentioned above.

WO 01/59215 A1 discloses a coating for coating paper or the like, the use of the coating, and a method for making the coating. The coating is made by mixing together two different pigment mixes, which contain minerals. The first mix is made by mixing a mineral material, such as calcium carbonate, kaolin, titanium dioxide, gypsum, talc and/or another corresponding material used as a pigment, and a first binding agent, such as synthetic polymer, latex and/or another corresponding binding agent. The second mix is made by mixing a second mineral material, which mainly comprises talc particles and/or other phyllosilicate particles, and a second binding agent, such as a synthetic polymer, latex and/or a second corresponding binding agent. The second binding agent may be based on starch or be a diester of citric acid, for example, with a divalent or polyvalent alcohol. Thus, the citric acid is not used for cross-linking starch.

US 2010/0143738 A1 discloses novel biolatex conjugate compositions and methods of production and use thereof. The novel biolatex conjugate compositions comprise a biopolymer-additive complex (prepared by co-extruding a biopolymer feedstock, at least one performance-enhancing additive, and at least one plasticizer under shear forces) reacted with a cross-linking agent under shear forces. The biolatex conjugate compositions exhibit enhanced performance properties for coated paper, paperboard, and other applications using low levels of performance-enhancing additives.

## SUMMARY OF THE INVENTION

The object of the present invention is to provide a method of making a coated product, wherein a substrate of fiber-based material is provided with a coating with improved barrier properties.

This object is achieved by a method as defined in claim 1.

It is to be noted that the invention belongs to a kind of composite technology and that the skilled person therefore realizes that the use of pph (parts/100) is more relevant than using e.g. weight %.

Thanks to the invention there is provided a method that is industrially applicable in a cost-efficient manner and a coated product that may meet many desired demands regarding coated products thereby presenting an environmentally friendly alternative to coated products using petroleum based products. Thanks to the invention the cross-linking may be achieved subsequent to applying the coating on a web/sheet, which is clearly beneficial regarding feasibility in an industrial process.

The biopolymer material is polysaccharides (e.g. starch, amylose, amylopectin, cellulose, hemicellulose, chitosan) and their derivatives, but suitably it is a polysaccharide, such as starch or hemicellulose, and preferably it is starch. Starch is the most common carbohydrate in the human diet and is contained in large amounts in such staple foods as potatoes, wheat, corn (maize), rice, and cassava. As starch is non-toxic, it is well suited for forming the base in coatings forming a barrier on products that come into contact with food.

To provide the desired barrier effect, the coating layer suitably has an oxygen permeability of less than 10 ml/$m^2$ 24h, preferably in the range of 1-10 ml/$m^2$ 24h, and most preferred 1 ml/$m^2$ 24h or lower. In addition or alternatively, the coating layer when having a surface weight of 10 g/$m^2$ suitably has a water vapor transmission rate (WVTR) 23 °C 50 % RH lower than 20 g/$m^2$ 24h, preferably lower than 15 g/$m^2$ 24h, and most preferred 10 g/$m^2$ 24h or lower.

To reduce production costs, it may be desirable that there is no intermediary layer between the substrate and the coating layer.

If desired, the coating layer may further comprise at least one additive, like fibrous or particulate fillers such as clay minerals, defoamer or cross-linking catalyst, for example. When clay is used, it preferably has particles of nanodimensional thickness. The particles can be described as platy and overlap one another so that they contribute to the desired barrier effect. The formulation can also be mixed with other types of polymers, e.g. poly(vinyl alcohol) just to mention one additional polymer. The formulation can also contain one or more additional plasticizers such as PEG in combination with the poly-carboxylic acid.

Thanks to this method many advantages may be achieved as mentioned above.

pH may be adjusted by addition of suitable base which could be, but which is not limited to a citrate selected from the group consisting of mono-, di-, and trisodium citrate, and/or a base selected from the group consisting of NaOH, KOH, Ca(OH)$_2$, and Mg(OH)$_2$.

Suitably, the coating material is applied onto the substrate by any type of industrial coating or by printing, and preferably there is no intermediary layer between the substrate and the coating layer.

BRIEF DESCRIPTION OF THE DRAWINGS

In the following, the invention will be described in more detail with reference to preferred embodiments and the appended drawings.

Fig. 1 is a diagram showing the degree of di-esterification of films with 5 to 30 pph CA (CA5 to CA30) and films with 30 pph CA and adjusted pH (pH3 to pH6.5) for non-cured (70 °C) and cured films (105, 150 °C)

Fig. 2 is a diagram showing an equilibrium moisture content at 23 °C in CA-plasticized films dried at 70 °C vs. amount of CA at different % RHs. The thick solid line indicates the boundary between single-phase and two-phase behavior.

Fig. 3 is a diagram showing an equilibrium moisture content at 23 °C in CA-plasticized film dried at 70 °C and cured at 105 °C vs. amount of CA at different % RHs. The thick solid line indicates the boundary between single-phase and two-phase behavior.

Fig. 4 is a diagram showing an equilibrium moisture content at 23 °C for TPS with different plasticizers without subsequent curing vs. % RH.

Fig. 5 is a diagram showing the WVTR 23 °C 50 % RH with different amounts of CA

Fig. 6 is a diagram showing the WVTR 23 °C 50 % RH with different amounts of CA and different pH adjustments

Fig. 7 is a schematic view of a pilot machine presenting some general principles that may be applied to achieve a product in accordance with the invention, and

Fig. 8 shows schematically a coated product in accordance with the invention.

MODE(S) FOR CARRYING OUT THE INVENTION

The replacement of synthetic polymers with renewable materials as barriers for consumer packages is an ongoing research topic. Polysaccharides such as starch, cellulose, hemicellulose, chitosan and their derivatives are all renewable and fully biodegradable materials having similar structures of glucose units linked to each other. The presence of hydroxyl groups promotes dense structures created by hydrogen bonding between the chains that make polysaccharides good candidates as renewable barrier material. However, one of the main problems associated with polysaccharides is their inherent sensitivity to water due to the hydrophilic and hygroscopic nature of the polymer and the plasticizers used for achieving the desired mechanical flexibility. As a model polymer for polysaccharides, starches have been used in this study. In particular two different grades of oxidized and hydroxypropylated potato starches have been studied. From an aqueous mixture of dissolved starch and a suitable plasticizer present at high enough levels, thermoplastic starch (TPS) are formed after drying. A TPS forms flexible films and may contain some water in equilibrium with ambient moist air. It has been observed that the TPS barrier properties are significantly reduced with increasing relative humidity, RH or when the moisture content reaches a critical value. Water activity is an important factor for microbial growth and food texture and the provision of a barrier against water is thus a major concern in food packaging. Recent research on how to better utilize TPS as a barrier involves strategies to minimize this water sensitivity such as blending with a synthetic polymer or a natural polymer, the incorporation of inorganic fillers such as clay the incorporation of organic fillers based on cellulose or starch, modifying the starch, utilizing different plasticizers, using co-plasticizers and cross-linking the starch.

The addition of poly-functional organic acids such as citric acid (CA), succinic acid and adipic acid to renewable barrier materials has been the subject of recent publications due to the potential of the acids to crosslink starches and other polysaccharides. It has been shown that cross-linked materials are less susceptible to water and crosslinking stabilize the mechanical properties a high ambient relative humidity (RH) at the same time as the barrier properties are improved (reduced gas transport through the material). None of the reports has however pointed on a process window that makes industrial coating of paper and paperboard possible. Several reports are focusing on thickening of starch pastes as food additives - a thickening of a coating color (the coating dispersion or solution) is really unwanted in paper coating and may cause severe runnability problems. CA is a naturally occurring poly-carboxylic acid present in fruits such as lemon and lime. CA is biodegradable and renewable and is generally classified as safe for food usage and is included in many food products such as jams, juices and soft drinks. CA has been shown to affect TPS in several intriguing ways. CA has been shown to cross-link polysaccharide materials such as starch granules. CA also acts as a plasticizer and has been shown to promote starch hydrolysis by lowering the pH.

Starch has the potential to be cross-linked by poly-functional reagents which are able to react with two or more of the hydroxyl groups. The cross-links can be either intramolecular, within the same polymer chain or intermolecular, between different polymer chains. Intermolecular cross-linking reactions increase the average molecular weight of the starch and introduce chemical bridges between different molecules, which reduce the swelling in liquid water or at high RH. The swelling tendency decreases with increasing number of cross-links. Cross-linking of TPS is a potential method of improving its barrier properties by reducing the moisture content and minimizing the molecular movement and hence reducing the diffusion of small molecules such as oxygen and water through the film, but also grease resistance of the film is improved by the reduce molecular movement. One advantage of using CA as a cross-linker in e.g. food packaging applications is that unreacted CA remnants are considered to be nutritionally harmless and that they act as a plasticizer for TPS.

Industrial use of CA as cross-linking agent in production of barrier coated papers from aqueous solution of starch and other polysaccharides are difficult to perform due to hydrolysis of the polymer and to runnability problems as the speed of the coating machine is increased. At high machine speeds such as 200 m/min or higher and coating with aqueous dispersions or solutions, there is a balance between sufficient intense (rapid) drying strategy to prevent blocking in the winding station (or in the piles of paper sheets) and sufficient mild (slow) drying strategy to prevent blistering and similar defects. Our study reveals that it is possible to create sufficient degree of crosslinking at the same time as the hydrolysis is almost negligible. This combination of relatively high degree of crosslinking and low hydrolysis was needed in order to create good barrier properties. However, a barrier coating applied on paper or paperboard should also be flexible and convertable in order prevent cracks and other defects during converting and handling of the coated material. It was shown in our study that a carefully control of pH and drying conditions, as well as the amount of CA added to the film, enables formation of flexible cross-linked coatings where the added cross-linkers also acts as plasticizer. Hydrolysis, leading to a reduction in the starch molecular weight at low pH and elevated temperature is however reported to be the predominant reaction between starch and CA at high moisture content. Some processes in which hydrolysis of starch with CA can occur are melt processing in the presence of sufficient amounts of water, gelatinization and drying.

Control of pH gives less hydrolysis but also less problematic handling in industrial coatings, since several unit processes used in production of paper and board cannot handle too acidic formulations.

Below it is presented how cross-linked starch films and cross-linked coatings on paper and paperboard are produced. Films were cast by pouring starch-CA solutions into polystyrene Petri dishes followed by drying at 70 °C in a self-ventilated oven for 5 h, in order to remove most of the water at low temperature to prevent unwanted hydrolysis. The dried films were placed in desiccators over dry silica gel for 24 hours at room temperature. For the high temperature curing at 105 °C, 130 °C (for 30 pph CA only) and 150 °C, the dried samples were removed from the Petri dishes and placed on aluminum foil for 10 minutes in a non-ventilated oven at the desired curing temperature. Films were prepared without plasticizers, with 5, 10, 20 and 30 pph CA, 30 pph glycerol (GLY) and a combination of 5 pph CA and 30 pph GLY. All films were equilibrated at 23 °C and 50 % RH for at least 1 week before further investigation. These films and coatings were analyzed in order (i) to highlight the plasticizing effect and to gain understanding of the mechanisms behind plasticizing, (ii) to establish the process condition where substantial cross-linking occurs at the same time as the hydrolysis of the polysaccharide molecule is at a low level, and (ii) to investigate optimum conditions for production of starch coatings possessing high gas and grease barriers and reduced water solubility and uptake of water from humid ambient atmosphere. As models for polysaccharides two grades of hydroxypropylated and oxidized potato starch were used, both supplied by Solam (Kristianstad Sweden). The starches had an amylose content of 21 % and a degree of substitution of hydroxypropyl groups of 0.11. The difference between the two starch grades was the degree of oxidation. The two grades had in average 0.01 and 0.04 carboxyl groups of per anhydroglycose unit, respectively. The viscosity of an aqueous 20 % (by wt.) solution of the starch with the lower degree of oxidation was 180 mPas at 50 °C (Brookfield 100 rpm). The viscosity of an aqueous 20 % (by wt.) solution of the starch with the higher degree of oxidation was 30 mPas at 50 °C (Brookfield 100 rpm). The amount of CA in this study ranged from 0 to 30 parts (by wt.) per hundred parts of dry starch (pph). The drying temperature in production of free films was 70 °C, and after this initial drying, samples were cured at 105, 130 or 150 °C. For laboratory coated paper, the drying was performed at either 70, 105 or 150 °C. A comparison was also made with GLY, the most widely used plasticizer for TPS, as reported in the literature.

In one series the Mw was determined after de-esterification and dissolving in 0.1 M NaOH. This gave information about the degree of cross-linking and the films or coated papers were investigated by molecular weight (Mw) determination. High performance size-exclusion chromatography (HPSEC) system with three connected columns (OHpak SB-806 M HQ, OHpak SB-804 HQ and OHpak SB-803 HQ, Shodex, Showa Denko KK, Miniato, Japan) at 35°C was used. Refractive index (RI) and multi-angle laser light scattering (MALLS) were used for Mw determination. By this sample preparation, ester-linkages formed between CA and starch are hydrolyzed and Mw determinations only measure changes on the starch molecules due to CA hydrolysis. To detect cross-linking between CA and starch an alternative sample preparation method was used: the starch-containing sample was dissolved under stirring in hot water (70 °C) for 2h. The complete starch sample was not dissolved. Only the water soluble fraction of each film was analyzed. The water soluble fraction was filtered through a 0.45 $\mu$m filter and one part was directly injected into the HPSEC-MALLS-RI system for Mw determination. Another part was subsequently deesterified with 0.1 M NaOH for 2h at room temperature before Mw determination. In this step, the added NaOH hydrolyzed the CA-starch esters of the water soluble starch content. This qualitative Mw determination and the difference in Mw between the two methods of dissolution clearly indicated that a cross-linking reaction had taken place through esterification of CA between different polymer chains.

Table 1. Weight-average molecular weight (Mw) of non-cured and cured (105 °C, 150 °C) starch films dissolved in 0.1 M NaOH after de-esterification and $M_W$ of water soluble starch before (water) and after subsequent de-esterification with NaOH (+NaOH). The compositions of the films are indicated by CA for citric acid and G for glycerol, followed by the amount of the plasticizer in question given as parts (by wt.) per hundred parts of dry starch (pph). I.e. CA5 indicates a film containing 5 pph of citric acid.

| Sample | $M_W$ [$10^6$ g/mol][a] in NaOH | | | Water soluble Mw [$10^6$ g/mol] | | | | | |
|---|---|---|---|---|---|---|---|---|---|
| | Non-cured | 105°C | 150°C | Non-cured | | 105 °C | | 150 °C | |
| | | | | water | +NaOH | water | +NaOH | water | +NaOH |
| CA0 | 9.0 | 9.9 | 9.5 | 9.9 | 9.6 | 9.9 | 9.8 | 9.2 | 8.9 |
| G30 | 9.5 | 9.6 | 8.5 | 10.3 | 9.8 | 10.1 | 9.7 | 9.4 | 9.2 |
| CA5G30 | 6.8 | 6.0 | 3.1 | 1.7 | 1.5 | 3.3 | 2.1 | 3.1 | 2.1 |
| CA5 | 7.4 | 6.7 | 3.4 | 8.3 | 6.1 | 6.5 | 5.2 | 5.1 | 2.2 |
| CA10 | 8.4 | 5.5 | 1.8 | 7.4 | 5.9 | 7.3 | 6.2 | 6.1 | 5.0 |
| CA20 | 6.6 | 7.4 | 1.5 | 3.9 | 3.3 | 4.1 | 3.1 | 1.8 | 0.31 |
| CA30 | 6.1 | 5.8 | 0.2 | 0.41 | 0.33 | 0.27 | 0.22 | 0.34 | 0.05 |

In order to direct measure the amount of CA molecules taking part in diesterfication, i.e. two of the carboxylic acid groups of CA have formed a ester bond to starch, complexometric titration of CA with copper (II)-sulfate was performed as described elsewhere (see e.g. Graffmann, Domels, Sträter; "Bestimmung von Citrat in Wasch- und Reinigungsmitteln durch Titration mit Cu-Lösung. Fette, Seifen, Anstrichmittel", 76(5), 218-220 (1974) and Klaushofer, Berghofer, Pieber; "Stärkecitrate - Produktion und anwendungs-technische Eigenschaften", Starch - Stärke, 30(2), 47-51 (1979)). Copper (II)-ions are able to form a stable complex with CA in a stoichiometric ratio copper (II): CA of 1:1. The titration was carried out in two steps. First, the starch film samples were hydrolyzed with KOH to measure the total amount of CA including free and esterified CA. Second, the water-swollen films were titrated directly to measure free plus mono-esterified CA. The difference in titration yield indicates the amount of CA di-esters in the starch film that cannot be measured by titration. The endpoint of copper (II) titration is sharp and was detected with metal indicators. In addition, it is reported that discovered that asymmetric CA mono-methyl esters form similar complexes and react like the free acid. (Klaushofer, Bleier; "Versuche zur Aufklärung der Struktur von Citratstärken. 3. Mitteilung. Ergebnisse von Abbauversuchen mit amylolytischen Enzymen", Starch - Stärke, 35(7), 237-242 (1983)). Thus, copper (II) titration will detect free CA as well as asymmetric mono-esterified CA.

The titration was carried out in two steps. First, the starch film samples were hydrolyzed with KOH to measure the total amount of CA including free and esterified CA. Second, the water-swollen films were titrated directly to measure free plus mono-esterified CA. The difference in titration yield was calculated and indicates the amount of CA di-esters in the starch film that cannot be measured by titration and was used to obtain the weight fraction of CA taking part in a di-ester linkage ($w_{diester}$). In addition, the degree of di-esterification, $DDE$, of starch was calculated as:

$$DDE = \frac{2 m_{CA} w_{diester} M_{AGU}}{m_{starch} M_{CA}} \tag{1}$$

where $m_{CA}$ is the amount of CA added, $m_{starch}$ is the amount of starch, $M_{AGU}$ is the molar mass of one anhydroglucose unit (162 g/ mol) and $M_{CA}$ is the molar mass of CA (192 g/ mol). The DDE is a measure of the number of anhydroglucose units in the starch chain that are di-esterified.

Table 2. Percentage of citric acid di-ester (calculated as difference in yield of CA of hydrolysed and non-hydrolysed titration) and degree of di-esterification (DDE) according to equation (1) of non-cured and cured (105 °C, 150 °C) citric acid containing starch films. The films are defined in Table 1.

| Samples | Difference in yield of CA[a,] | | | DDE | | |
|---|---|---|---|---|---|---|
| | Non-cured | 105 °C | 150 °C | Non-cured | 105 °C | 150 °C |
| CA5 | 7.4 ± 0.58 | 4.6 ± 0.89 | 7.8 ± 2.08 | 0.003 | 0.002 | 0.003 |
| CA10 | 2.5 ± 0.82 | 3.5 ± 1.16 | 6.8 ± 1.41 | 0.002 | 0.003 | 0.006 |
| CA20 | 3.6 ± 1.11 | 2.8 ± 0.82 | 2.2 ± 0.47 | 0.006 | 0.005 | 0.004 |
| CA30 | 3.2 ± 0.70 | 11.0 ± 1.83 | 21.3 ± 3.28 | 0.008 | 0.028 | 0.054 |

[a] Difference between CA titration of hydrolyzed and non-hydrolyzed film [%].

The results in Tables 1-2 show that there are a substantial crosslinking by di-esterfication in the cured films containing 30 pph CA. Table 1 also shows that there was a substantial starch hydrolysis at the highest CA-level, especially if curing at elevated temperatures took place. The free films shown in Tables 1-2 were produced without pH-adjustments. Addition of CA at concentrations from 5 to 30 pph resulted in pH ranging from 1.9 to 2.5 in the starch solution in the absence of pH adjustments. Table 3 shows that hot-water solubility of films produced from solutions adjusted to pH 3, 4, 5, and 6.5 by addition of NaOH. The solubility was detected spectrophotometrically by the phenol sulfuric acid method. The molecular weight of the hot-water soluble part of the films is also included in Table 3 and was detected as described for Table 1. One can clearly see that only limited hydrolysis of starch occurred at pH4 as long as the curing temperature was not higher than 105°C. Still there are differences between Mw before and after de-esterfication, indicating some cross-linking. This indicates a suitable process window around pH4 and 30 pph CA, even if also other combinations are effective as indicated by Table 3.

Table 3. Hot-water solubility (70°C) and weight-average molecular weight (Mw) of soluble part of cured and non-cured starch films with 30 pph CA, without and with adjustments to pH 3, 4, 5, and 6.5, respectively.

| Sample | Temp treatment | Water solubility %[a,] | Mw [$10^6$ g/ mol][b] | |
|---|---|---|---|---|
| | | | In water | Plus NaOH |
| pH 2 | None-cured | 16.0 | 0.41 | 0.33 |

(continued)

| Sample | Temp treatment | Water solubility %[a], | Mw [$10^6$ g/ mol][b] | |
|---|---|---|---|---|
| | | | In water | Plus NaOH |
| | Cured at 105 °C | 18.3 | 0.27 | 0.22 |
| | Cured at 150 °C | 27.5 | 0.34 | 0.05 |
| pH3 | None-cured | 39.4 | 8.11 | 5.14 |
| | Cured at 105 °C | 34.0 | 8.35 | 4.90 |
| | Cured at 150 °C | 15.9 | 0.16 | 0.13 |
| pH4 | None-cured | 47.7 | 9.47 | 8.72 |
| | Cured at 105 °C | 44.5 | 9.64 | 8.55 |
| | Cured at 150 °C | 19.1 | 0.19 | 0.15 |
| pH5 | None-cured | 31.0 | 8.82 | 8.55 |
| | Cured at 105 °C | 30.8 | 8.51 | 8.13 |
| | Cured at 150 °C | 31.1 | 7.85 | 6.45 |
| pH6.5 | None-cured | 39.2 | 10.30 | 10.11 |
| | Cured at 105 °C | 43.7 | 10.83 | 10.13 |
| | Cured at 150 °C | 42.5 | 10.20 | 9.53 |

[a] In g anhydroglucose per 100 g starch,

The effects of crosslinking the starch solution were measured by a test of the gel content. The film sample was put in 5 mL of formic acid under mild stirring for either 24 h at 23 °C or 5 h at 50 °C. The gel content was determined as the dry weight of the material that did not pass through a stainless steel (Tyler mesh 30) and was expressed as percentage of dry film weight. A measurement of the gel content of a polymer in a selected solvent measures the amount of a film that is cross-linked beyond this gel point which means that it is sufficiently cross-linked and has a sufficiently high Mw not to diffuse into the solvent. Only the films with 20 pph CA cured at 150 °C and the films with 30 pph CA were not completely dissolved in formic acid after 24 h at 23 °C. The gel content was 23.3 % for films containing 20 pph CA cured at 150 °C and 74.0 %, 75.3 % and 52.8 % for films containing 30 pph CA non-cured, cured at 105 °C and 150 °C, respectively. Curing at 150 °C did not increase the gel content probably due to the hydrolysis of starch as seen in the Mw determination.

Besides acting as cross-linker, CA has the ability to act as plasticizer. The effect of CA as plasticizer and the water uptake at different relative humidity were experimentally investigated for free films and the water permeability was calculated from experimental data of water solubility and diffusion. The effects of CA on grease barriers and gas permeability were measured for coated papers and paperboards.

The degree of crosslinking and degree of hydrolysis were investigated for free starch films as well as for coated paper and paperboards. Oxygen transmission rates, water vapor transmission rate and grease resistances were investigated for coated materials by the standardized methods ASTM E 398-03, ISO 2528, TAPPI 454 and TAPPI T 559 cm-02 (KIT test), respectively.

The starch solutions were prepared by dispersing dry starch in deionized water. The aqueous starch dispersion was gelatinized by immersion in a boiling water bath under vigorous stirring for 45 minutes. Since the addition of CA to starch can cause hydrolysis at high temperature and high water content, CA was added after the gelatinization. The same procedure was used when glycerol (GLY) was added. Addition of CA at concentrations from 5 to 30 pph resulted in pH ranging from 1.9 to 2.5 in the starch solution. As mentioned above starch solutions adjusted to pH values up to 6.5 may be of interest due to reduced starch hydrolyses. The final pH (and desired degree of neutralization of CA) was in some experiments performed by addition of a solution of NaOH to the starch solution before or after addition of CA. As an alternative method to produce the pH-adjusted solutions, sodium salts of CA such as tri-sodium citrate were added to the starch solution. The usage of sodium salts was a preferential method if the solids level of the final dispersion or solution should be as high as possible.

For the moisture uptake of free films, whole films, adding up to a sample size of approximately 2 g and a Controlled Moisture Generator, CMG (TJT-Teknik AB, Järfälla, Sweden) was used. The weight of the sample was recorded on an analytical balance. The temperature inside the chamber was set to 23 °C. The chamber conditions were monitored every minute during the testing sequence. Before the sorption trials were performed, the starch films were conditioned in a room with controlled temperature and RH conditions (23 °C and ~25 % RH) for at least 3 days. The RH in the controlled moisture generator was increased in steps from 50-60-70-80-90 % RH at set time intervals in order to obtain moisture sorption isotherms from which diffusion coefficients could be calculated. The diffusion coefficient was assumed to be independent on the moisture content within each step. The dry weight of the films was determined gravimetrically by drying the films in a well-ventilated oven at 105 °C overnight after the sorption experiments.

For the films that had not reached an equilibrium weight at the end of each sequence, the equilibrium weight uptake was determined by fitting the experimental data points to the equation.

$$\frac{t}{m_t} = \frac{t}{m_\infty} + \frac{1}{K m_\infty} \dots\dots\dots\dots\dots (2)$$

where $t$ is the time, $m_t$ is the weight uptake at the time $t$, $m_\infty$ is the weight uptake at time infinity and $K$ is a constant. Equation 2 was arbitrarily selected as an equation where $m_t$ asymptotically approaches $m_\infty$ as $t$ goes towards infinity, with $m_\infty$ and $K$ as the fitting parameters.

The density of the dry films was determined by Archimedes principle on a Precisa Density Determinations Kit connected to a Precisa 410AM-FR analytical scale (Precisa Gravimetrics AG, Dietlikon, Switzerland) by immersing the films in octane. The films were dried at 23 °C in desiccators with silica gel for 120 hours before the density determinations. The density of all films was $1.46\pm0.02$ g/cm$^3$.

The water vapor transmission rate, WVTR was measured in duplicate using a Mocon Permatran-W 3/33 (MOCON, Inc. Minneapolis, USA) according to ISO 9932:1990(E) at 23 °C. The measurements were performed as a gradient series across coated paper with an area of 5 cm$^2$. The series consisted of: 50-0, 60-0, 70-0, 80-0 and 90-0 % RH and was performed from low to high RH. Before the measurements, the specimens were conditioned at the measurement conditions with 50-90 % RH on one side and dry nitrogen gas on the other until equilibrium was achieved. The water vapor permeability, WVP(*Dir*) was calculated from the WVTR results according to:

$$WVP(Dir) = \frac{WVTR \times h}{p \times (R_1 - R_2)} \dots\dots\dots\dots\dots (7)$$

where $h$ is the thickness of the coating layer, $p$ is the partial pressure of water, $R_1$ and $R_2$ are the relative humidity on the high and low RH side of the specimen respectively. The thickness was calculated from the coat weight and the density of the coating.

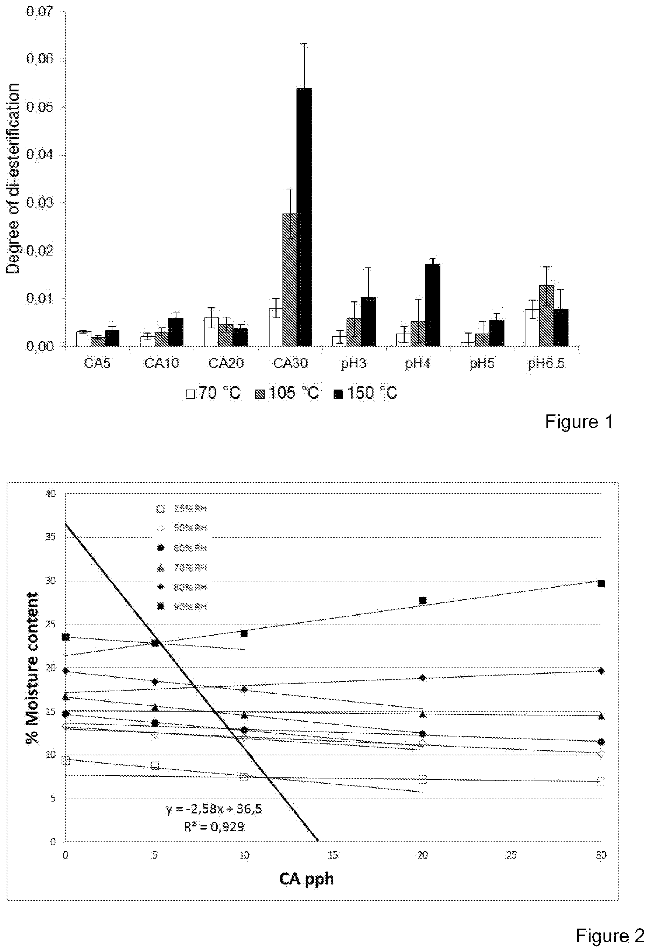

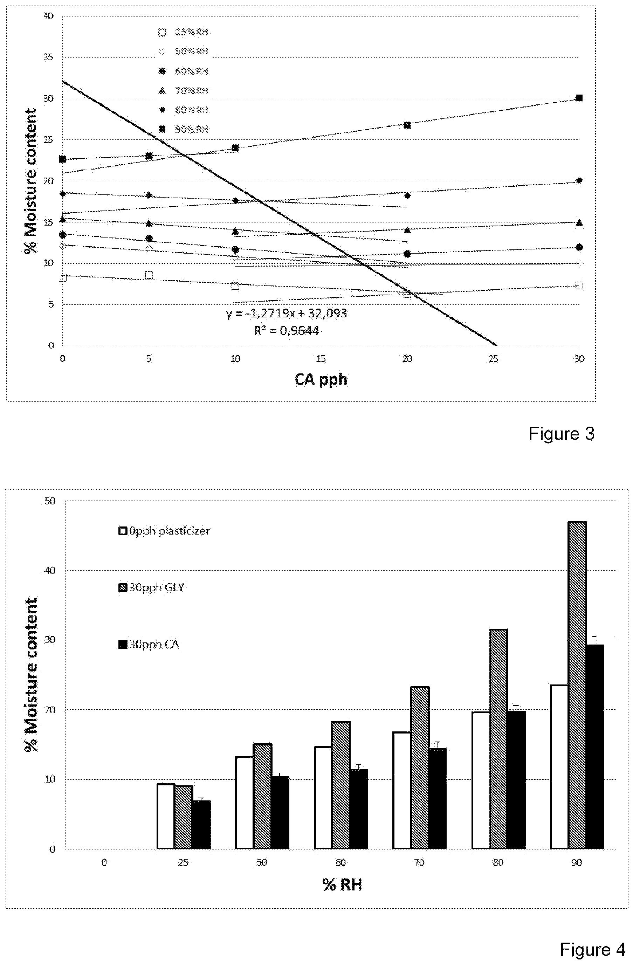

From the equilibrium values in the moisture uptake curves, information was extracted regarding the effect of plasticizer, plasticizer content and curing temperatures which can be seen in figure 2 and 3.

For films stored at 23 °C and 50 % RH, the data in Table 4 show that there is a significant decrease in moisture content with increasing CA content for the non-cured and the 105 °C-cured samples. For the 150 °C cured samples, no trend was observed.

Table 4: Moisture content for TPS with standard deviation for different CA-contents and curing temperatures stored in a climate room, 23 °C and 50 % RH.

| Curing temperature | % Moisture content | | | | |
|---|---|---|---|---|---|
| | CA0 | CA5 | CA10 | CA20 | CA30 |
| non-cured | 12.6±0.6 | 10.9±0.4 | 10.2±0.2 | 8.9±0.7 | 8.0±0.3 |
| 105 °C - cured | 11.3±0.6 | 10.3±0.2 | 9.0±0.0 | 8.4±0.6 | 7.6±0.4 |
| 150 °C - cured | 10.8±0.2 | 9.00±0.6 | 8.6±0.9 | 9.8±0.1 | 8.6±0.3 |

The WVP values calculated from the diffusion coefficient and solubility data and the WVP values obtained by direct measurement are of comparable magnitude as can be seen in Table 5. Since the direct measurements were performed with a gradient in relative humidity, instead of a constant RH for the diffusion and solubility measurements, the former method should theoretically yield significantly lower WVP values. The reason that this was not observed was probably due to an uneven thickness distribution of the coated samples due to penetration of the coating into the base paper and to defects in the coating such as cracks and pinholes. The diffusion and solubility data could therefore be used to assess the full potential of a "defect-free" coating.

Table 5. WVP from direct measurements (Dir) and calculated from diffusion and solubility data (Calc)

| % RH | WVP $10^{12}$ [g Pa$^{-1}$s$^{-1}$ m$^{-1}$] | |
|---|---|---|
| | (Dir) | (Calc) |
| 50 | 2.5 | 1.2 |
| 60 | 3.9 | 2.3 |
| 70 | 7.1 | 3.3 |
| 80 | 12 | 13 |
| 90 | 18 | 10 |

The addition of citric acid to the starch solutions in accordance with the invention presents a potential method to decrease both the moisture content and the diffusion coefficient and hence to improve the barrier properties, and this has been confirmed by water vapor permeability measurements. The diffusion coefficient decreased with increasing CA content for all curing conditions. The moisture content showed a more complex behavior due to a phase separation observed for non-cured and 105 °C cured films into regions of low and high CA content respectively, which may be separated by an intersection line in the graph. To the left of the intersection line, antiplasticization is thought to occur and in this region there was significant decrease in moisture content with increasing CA content. To the right of the intersection line, a two-phase system is thought to occur, and there were only minor differences in moisture content with increasing CA content up to 70 % RH, followed by an increase in moisture content at higher RH. High-temperature (150 °C) curing seemed to have the greatest impact on diffusion coefficient and moisture sorption in the film with highest CA content. The moisture content of the film containing 30 pph CA cured at 150 °C was reduced at high % RH but increased at low and medium % RH. This could be explained by a cross-linking reaction leading to a rigid and more open structure that is less prone to swelling. Compared to TPS plasticized with glycerol, the addition of citric acid to starch resulted in considerably lower diffusion coefficients and lower moisture content over the entire RH range.

The different paper and paperboard substrates were Super Perga WS Parchment (Nordic Paper Säffle, Sweden) Candor LF BC (Nordic Paper Säffle, Sweden), machine glazed paper (Billerud AB, Gruvön Mill, Sweden) and paperboard produced by Korsnäs AB, Gävle, Sweden. In order to minimize effects of pinholes, both the pilot and the draw-down coatings were applied in two layers with drying in between each layer.

All recipes contained a hydroxypropylated and oxidized starch, the amount of starch was always 100 parts on dry basis and all other chemicals added are given as parts per hundred parts (pph) of dry starch.

Examples 1-6

Free films of thermoplastic starch, TPS were made by casting of solutions containing starch and CA in Petri Dishes. Starch (solid) content was approx 10 % (w/w). Drying was performed for 5h at 70 °C. Curing (if done), 10 min at reported temperature 105°C or 150°C. For the pH adjusted films, the pH-adjustment was done with 40 wt % NaOH.

Examples 7-14

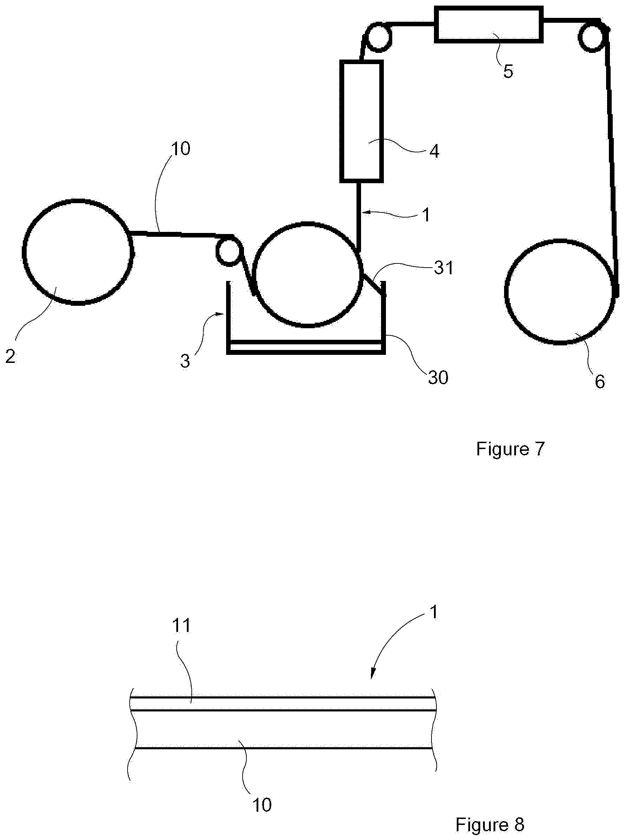

Paper or paperboard substrates were coated on a laboratory bench coater (K202 Control Coater, RK Coat Instruments Ltd., Royston, UK). In Fig. 8 there is schematically shown a coated product 1 in accordance with the invention, presenting a substrate 10 arranged with a coating 11. The coatings were applied in double layers with drying in between by a wire-wound bar. All recipes contained 30 pph CA unless otherwise stated. Drying of each coating layer was carried out in an air-circulated oven at 105°C for 90 s unless otherwise stated. The type of substrate used and resulting coat weight are specified in each Example below.

The water vapor transmission rate, WVTR, was measured with the gravimetric dish method (ISO 2528) using silica gel as desiccant. WVTR for non-coated paperboard 900 g/m$^2$ 24h, for Billerud Machine Glaze 700 g/m$^2$ 24h and for Nordic Paper Super Perga 200 g/m$^2$ 24h. The test conditions were 23°C and 50% relative humidity (RH) and the results are presented in grams per square meter per 24 h.

Examples 15-16

The coating recipes consisted of 100 pph starch, 30 pph citric acid and 0,01 wt % defoamer BIM 7640. The pH was adjusted to pH=4 with NaOH. Kaolin filler with highly platy particles (Barrisurf LX™, Imerys) was added at concentrations of 87 or 104 pph. A nanosized clay filler (Cloisite Na+™, Southern Clay Products Inc.) was added at either 0 or 3 pph. The solids content was about 40-45%.

Application of the coatings was made in two layers on a pilot machine (UMV Coating Systems AB, Säffle, Sweden) at a machine speed of 400m/min with drying in between application of the two layers. In Fig 7 there is schematically shown the structure of the pilot machine, having an unwinding reel 2 for the substrate 10 (in web form), thereafter a coating arrangement 3 (e.g. including a supply arrangement 30 for the coating suspension and a coater blade 31) and a subsequent drying arrangement 4, 5 (here in the form of an iR-dryer 4 followed by a hot air dryer 5 (prefereably including an air turn). Finally the coated web 1 is wound up on a rewinding reel 6. It is to be understood that the dwell time, in the drying section 4, 5 in an industrial process is very short (compared to curing times used in many of the above mentioned prior art documents, relating to laboratory tests), e.g. presenting a curing time less than 20 seconds, normally less than 10 seconds and more preferred less than 5 seconds. The curing temperature was around 100 °C measure on the web 1 within the drying section 4, 5, implying that the invention may be used also in connection with temperatures below 100 °C.

In the tests coating arrangement 3 included application by means of jet applicator and stiff bent blade with hard tip was used as metering, coater blade 31. The drying arrangement 4,5 included an IR-dryer, air turn, and air hoods.

The resulting coat weight was 10 g/m$^2$. The water vapor transmission rate, WVTR, was measured according to ASTM E 398-03 by a Mocon® PermaTran® water vapor transmission rate tester, Model 3/33 (Mocon Inc., Minneapolis, MA, USA), at 23°C and a RH gradient from 50% to 0% RH.

In the examples below, "citric acid" is abbreviated "CA".

EXAMPLES

Example 1: Di-esters of Citric acid in free films

This example shows how the occurrence of di-esters depend on the amount of CA, the pH of the starch solution and the curing temperature which has been performed by Titration with copper (II)-ions which has been performed before and hydrolysis of the starch - CA ester bonds.

The degree of di-esterification, defined as the fraction of the starch chains that are di-esterified is a measure of cross-linking. Cross-linking of Starch with CA is defined as the inter-molecular ester-formation between one CA molecule and two starch molecules. However, di-esters can also be introduced intra-molecularly and this method cannot differentiate between inter- and intra-molecular di-esters and hence the degree of di-esterification is a rough measure of cross-linking. However, the measurement of molecular weight reduction after ester-hydrolysis (Example 3) clearly implies that the films are cross-linked by CA-starch di-esters.

Figure 1 shows the degree of di-esterification, for non pH adjusted films (roughly pH 2) CA5 to CA30 where the number after CA stands for the pph of citric acid. The film samples marked with pH3 to pH6.5 consist all of 30 pph CA. The figure shows the influence of pH and curing temperature on the degree of di-esterification. Films marked with 70°C are not cured.

Example 2: Molecular weight measurements of non-pH adjusted and pH adjusted free films

This example relates to molecular weight measurements on non pH adjusted free films with different amounts of CA and pH adjusted free films with 30 pph CA.

The free films were dissolved in 0.1 M NaOH to a concentration of 5 mg/ ml.

Table 6a shows that for non pH adjusted films with 5 to 30 pph CA (pH around 2 if citric acid is present without pH adjustment), there is extensive hydrolysis of starch in free films with both increasing curing temperature and concentration of CA. The sample without citric acid, CA0 showed no increased hydrolysis with increasing temperature. Hydrolysis is shown as a decrease in molecular weight, e.g. 30 pph CA at 150 °C resulted in a decrease of about 97 % compared to non-CA containing films dried at 70 °C.

Table 6b shows that there is substantial hydrolysis, seen as decrease in molecular weight for samples at pH 3 if the temperature of curing was 105 °C or higher and at pH 4 if the temperature of curing was 150°C. (An increased pH reduced acid hydrolysis and no major starch degradation occurred resulting in higher $M_W$.

*Table 6a:* Weight-average molecular weight ($M_W$) of non-cured and cured (105 °C, 150 °C) non pH adjusted starch films dissolved in 0.1M NaOH.

| Samples | $M_W$ [$10^6$ g/mol][a] in NaOH | | |
|---|---|---|---|
| | Non-cured | 105°C | 150°C |
| CA0 | $9.0 \pm 0.37$ | $9.9 \pm 0.03$ | $9.5 \pm 0.14$ |
| CA5 | $7.4 \pm 0.27$ | $6.7 \pm 0.08$ | $3.4 \pm 0.12$ |

(continued)

| Samples | $M_W$ [$10^6$ g/mol][a] in NaOH | | |
|---|---|---|---|
| | Non-cured | 105°C | 150°C |
| CA10 | 8.4 ± 0.26 | 5.5 ± 0.61 | 1.8 ± 0.02 |
| CA20 | 6.6 ± 2.13 | 7.4 ± 0.02 | 1.5 ± 0.02 |
| CA30 | 6.1 ± 0.08 | 5.8 ± 0.05 | 0.23 ± 0.01 |
| [a] mean value of duplicates with standard deviation | | | |

*Table 6b:* Weight-average molecular weight ($M_W$) of cured and non-cured starch films without citric acid (CAO) and 30 pph CA with adjusted pH (pH 3, 4, 5, 6.5) and without (CA30) adjusted pH values.

| Sample | $M_W$ [$10^6$ g/ mol][a] in NaOH | | |
|---|---|---|---|
| | non-cured | 105 °C | 150°C |
| CA0 | 9.0 ± 0.37 | 9.9 ± 0.03 | 9.5 ± 0.14 |
| CA30 | 6.1 ± 0.08 | 5.8 ± 0.05 | 0.23 ± 0.01 |
| pH 3 | 7.6 ± 0.50 | 8.1 ± 0.76 | 3.9 ± 0.14 |
| pH 4 | 9.2 ± 0.53 | 9.1 ± 0.16 | 5.3 ± 0.41 |
| pH 5 | 8.5 ± 1.12 | 8.8 ± 1.15 | 8.3 ± 0.93 |
| pH 6.5 | 9.7 ± 0.42 | 9.4 ± 0.27 | 9.5 ± 0.36 |
| [a] mean value of duplicates with standard deviation | | | |

Example 3: Molecular weight measurements, water solubility and hydrolysis of cross-links on non pH adjusted and pH adjusted free films

This example relates to water solubility, molecular weight on the water soluble fraction and decrease in molecular weight by hydrolysis cross-links for pH adjusted and non pH adjusted free films.

The free film (25 mg) was partially dissolved during 2 h in 5 ml distilled water (70 °C) and molecular weight of the water-soluble part was measured before and after subsequent NaOH hydrolysis of ester-linkages

In table 7a it is seen that the water solubility of the starch films depend strongly on the amount of CA and the water solubility decreases with increasing CA. Curing temperature seems to affect the water solubility

In table 7b it is seen that the water solubility of the starch films is dependent on both pH and curing temperature. For the non-pH adjusted samples the water solubility increases with increasing curing which could be explained by excessive hydrolysis. For pH 3 and 4 there is a decrease in water solubility with increasing curing temperature. For pH 5 and 6.5 it is not changing so much, most likely because here there is less cross-linking in the water soluble starch matter.

In table 7a and 7b, the molecular weight of the water soluble part decreased significantly when ester cross-linkages are broken by 0.1 M NaOH (compare columns "In water" and column "Plus NaOH"). This reduction in $M_w$ after hydrolyzing the starch - CA ester bonds is a direct measurement of cross-linking and it was seen to occur for the films containing CA which had a pH of less than 6.5. More citric acid, lower pH and higher curing temperature lead to a larger decrease of molecular weight when the cross-linkages were broken by NaOH. Note that the films were only partially soluble in hot water, which means that the Mw in water is not representative for the whole film sample.

However, titration results (Example 1) showed that di-ester are measurable in all films, e.g. up to ca. 5 % of total CA were di-esterified in the film with a pH of 6.5 but there was no strong indication of cross-linking in the water soluble starch. Di-esters could be introduced inter- and intra-molecularly where the latter case would not result in cross-linkages between starch molecules. This analysis indicates only cross-linkages in the water soluble starch content, which represents 16 to 48 % of the whole film (water solubility). Cross-linking within the water insoluble starch cannot be detected with this method.

*Table 7a:* Hot-water solubility at 70 °C of starch films and Mw of the hot-water soluble part of the films before (In water) and after (Plus NaOH) subsequent de-esterification in 0.1 M NaOH for 2 h.

| Sample | Temp treatment of starch film | Water solubility %[a] | $M_W$ [$10^6$ g/ mol][b] | |
|---|---|---|---|---|
| | | | In water | Plus NaOH |
| CA0 | Non-cured | 78.0 | 9.9 ± 0.19 | 9.6 ± 0.05 |
| | Cured at 105° C | 75.5 | 9.9 ± 0.20 | 9.8 ± 0.22 |
| | Cured at 150 °C | 71.7 | 9.2 ± 0.76 | 8.9 ± 0.78 |
| CA5 | Non-cured | 71.7 | 8.3 ± 0.99 | 6.1 ± 0.27 |
| | Cured at 105 °C | 62.3 | 6.5 ± 0.09 | 5.2 ± 0.42 |
| | Cured at 150 °C | 74.6 | 5.1 ± 0.05 | 2.2 ± 0.07 |
| CA10 | Non-cured | 55.8 | 7.4 ± 0.54 | 5.9 ± 1.05 |
| | Cured at 105 °C | 59.7 | 7.3 ± 0.85 | 6.2 ± 0.19 |
| | Cured at 150 °C | 58.9 | 6.1 ± 0.05 | 5.0 ± 0.54 |
| CA20 | Non-cured | 30.6 | 3.9 ± 0.01 | 3.3 ± 0.39 |
| | Cured at 105 °C | 29.1 | 4.1 ± 0.43 | 3.1 ± 0.43 |
| | Cured at 150 °C | 33.3 | 1.8 ± 0.44 | 0.31 ± 0.44 |
| CA30 | Non-cured | 16.0 | 0.41 ± 0.11 | 0.33 ± 0.01 |
| | Cured at 105 °C | 18.3 | 0.27 ± 0.01 | 0.22 ± 0.02 |
| | Cured at 150 °C | 27.5 | 0.42 ± 0.12 | 0.13 ± 0.12 |

a mean value of duplicates, b mean value of duplicates with standard deviation

*Table 7b:* Hot-water solubility and weight-average molecular weight (Mw) as defined in Table 7a of cured and non-cured starch films with 30 pph CA with and without adjustments to pH 3, 4, 5, and 6.5, respectively.

| Sample | Temp treatment | Water solubility %[a,b] | Mw [$10^6$ g/ mol][b] | |
|---|---|---|---|---|
| | | | In water | Plus NaOH |
| CA 30 | None-cured | 16.0 | 0.41 | 0.33 |
| | Cured at 105 °C | 18.3 | 0.27 | 0.22 |
| | Cured at 150 °C | 27.5 | 0.34 | 0.05 |
| pH3 | None-cured | 39.4 | 8.11 | 5.14 |
| | Cured at 105 °C | 34.0 | 8.35 | 4.90 |
| | Cured at 150 °C | 15.9 | 0.16 | 0.13 |
| pH4 | None-cured | 47.7 | 9.47 | 8.72 |
| | Cured at 105 °C | 44.5 | 9.64 | 8.55 |
| | Cured at 150 °C | 19.1 | 0.19 | 0.15 |
| pH5 | None-cured | 31.0 | 8.82 | 8.55 |
| | Cured at 105 °C | 30.8 | 8.51 | 8.13 |
| | Cured at 150 °C | 31.1 | 7.85 | 6.45 |
| pH6.5 | None-cured | 39.2 | 10.30 | 10.11 |
| | Cured at 105 °C | 43.7 | 10.83 | 10.13 |
| | Cured at 150 °C | 42.5 | 10.20 | 9.53 |

a in g anhydroglucose per 100 g starch, b mean value of duplicates

Example 4: Moisture content at different % RH vs. CA content

This example shows how the moisture content in free films depend on the amount of CA for non-cured films and for films cured at 105 °C at different % RH. Free films were produced from solutions of hydroxypropylated starch to which CA was added. Addition of CA at concentrations from 5 to 30 pph resulted in pH ranging from 2.5 to 1.9 in the starch solution.

The equilibrium moisture content in free films at different relative humidity as a function of CA content for films dried at 70 °C without subsequent curing and with subsequent curing at 105°C is shown in Figure 2 and Figure 3, respectively. Two different regions separated by an intersection line can be observed. To the left of the intersection line, there is a reduction in moisture uptake with increasing CA content. To the right, the decrease is smaller and, in fact, the moisture uptake increases with CA content above 70 % RH. This indicates the presence of a two-phase system on the right-hand side with a starch-rich and a plasticizer-rich region, which has been reported by L. Godbillot, P. Dole, C. Joly, B. Roge', M. Mathlouthi, Analysis of water binding in starch plasticized films, Food Chemistry 96 (2006) 380-386, for the system of GLY-plasticized TPS, where it was proposed that the intersection corresponded to monolayer coverage of the starch hydroxyl interaction sites. The slope of the intersection line is reduced significantly and the point corresponding to CA monolayer coverage is shifted to a higher CA content than with the non-cured films which can be explained by an esterification reaction between the CA and the starch (the increase of di-esters with increasing curing temperature can be seen in Figure 1).

The decrease in moisture content for 50 % RH with increasing CA content shown in Figure 2 and 3 corresponds well to the decreased WVTR presented in Example 7.

Example 5: Moisture content of pH adjusted films containing 30 pph CA

This example shows how the moisture content at 23°C and 50% RH depends on pH of the starch solution and curing conditions for films containing 30 pph CA. Free films were produced from solutions of hydroxypropylated starch and CA.

Table 8 shows that the moisture content at 50 % RH has a minimum at the highest curing temperature and at pH 4. This corresponds well to the lowest WVTR as seen in example 9.

*Table 8:* Moisture content for films with 30 pph CA, stored at 23 °C and 50 % RH with different pH and curing conditions

| Curing temperature | % Moisture content | | | | |
|---|---|---|---|---|---|
| | Non adjusted (pH 2) | pH 3 | pH 4 | pH 5 | pH 6.5 |
| non-cured | 8.0±0.3 | 8.0±0.6 | 7.3±0.1 | 7.8±0.04 | 11.21±0.5 |
| 105 °C cured | 7.6±0.4 | 6.7±0.7 | 6.9±0.3 | 7.0±0.5 | 11.16±0.3 |
| 150 °C cured | 8.6±0.3 | 6.0±0.9 | 4.9±0.8 | 5.6±0.4 | 11.2±1.6 |

Example 6: Effect on plasticizer on the moisture content

This example shows how the moisture content at equilibrium for starch films plasticized with 30pph CA (pH 1.9) or 30pph Glycerol compared to films that do not have an additional plasticizer. Free films were produced from solutions of hydroxypropylated starch and from solutions containing both hydroxypropylated starch and plasticizer.

Figure 4 shows that that films plasticized with CA have a lower moisture content compared to films plasticized with Glycerol from 25% RH up to 90% RH. It is also seen that films plasticized with CA have a lower moisture content compared to non-plasticized films up to about 80% RH.

Example 7: Effect of citric acid concentration on WVTR

This example shows how the amount of CA affects WVTR.

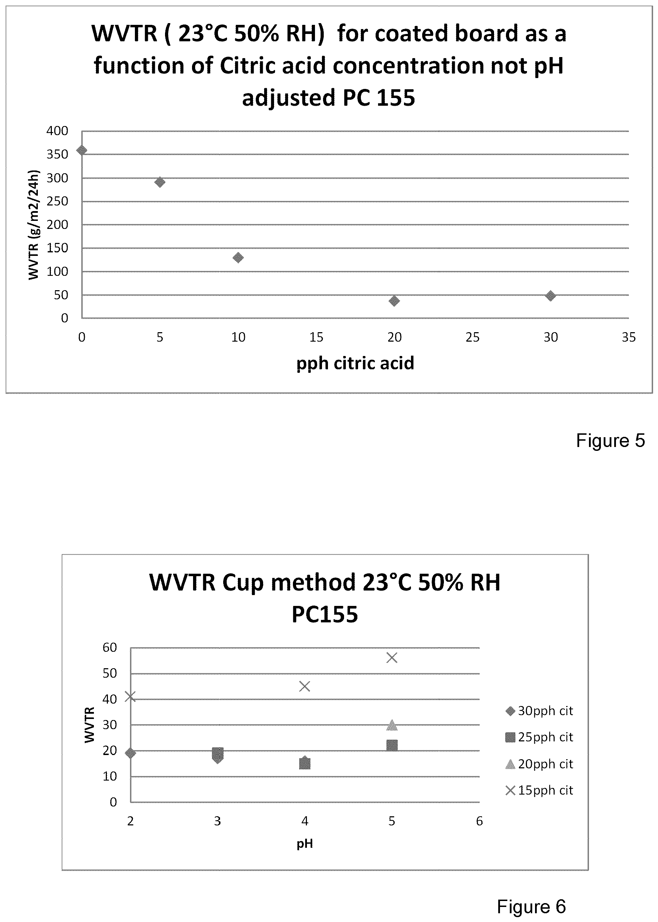

Anhydrous citric acid was added to starch at concentrations 0, 5, 10, 20 and 30 pph pH for films with CA from pH 2.5-1.9. No adjustment of pH was done. The solutions were draw-down coated on paperboard. Figure 5 shows the WVTR as an effect of concentration of citric acid for coated paperboard. The solids content was in the range between 20-25 wt %. The total coat weight was 25 g/m$^2$. The example clearly demonstrates a strong initial reduction in WVTR with increased amount of citric acid. Over a certain amount the WVTR seems to fairly stable at fairly low values. From this figure, it can be concluded that 20 and 30pph CA are good for barrier properties which corresponds well to the results in Example 4 at 50 % RH in which an increasing amount of CA is shown to decrease the water content in the films.

Example 8: Effect of citric acid concentration and pH on WVTR

This example shows how the amount of CA and the solution pH affects WVTR.

Anhydrous citric acid was added to starch at concentrations 15, 20, 25 and 30 pph. The pH of the starch-citric acid solutions was about 2 without adjustment. The pH was adjusted to 3, 4 and 5 with 40 wt % NaOH. The solutions were draw-down coated on paperboard. The solids content was in the range between 20-25 wt %. Figure 6 shows the WVTR as an effect of concentration of citric acid and pH for coated paperboard. The total coat weight was 25 g/m$^2$. The example clearly demonstrates that both the amount of citric acid and the pH affects the water vapor transmission rate. The lowest WVTR was obtained for coatings with 25 and 30 pph citric acid at pH 4.

Example 9: Effect of pH and drying temperature on WVTR

This example shows how different curing and pH affect the WVTR for coated paper.

A starch solution containing 30 pph citric acid was used (pH about 2). The pH of the solution was adjusted to 3, 4, 5, and 6.5 with 40 wt % NaOH. The solutions, solids content about 35 wt % were draw-down coated on paper. Drying was carried out in an air circulating oven at 70°C, 105°C or 150°C for 90 seconds. Table 9a shows the total coat weight in g/m$^2$ for double coating on a paper substrate Nordic Paper super Perga 50 g/m$^2$ and Table 9b shows the WVTR. The example shows that both the pH and the drying temperature affect the WVTR. Lowest WVTR was obtained at pH 4 at all drying temperatures. Drying at 150°C resulted in lower WVTR over the entire pH range. These results correspond very well with the moisture contents shown in Example 5

*Table 9a:* Coat weight g/m$^2$ for different pH and drying temperatures

|  | pH 2 | pH 3 | pH 4 | pH 5 | pH 6.5 |
|---|---|---|---|---|---|
| T °C | Coat wt (g)m$^2$ | Coat wt (g)m$^2$ | Coat wt (g)m$^2$ | Coat wt (g)m$^2$ | Coat wt (g)m$^2$ |
| 70 | 18.1 | 17.3 | 16.1 | 16.8 | 18.5 |
| 105 | 15.9 | 15.5 | 16.6 | 16.4 | 16.8 |
| 150 | 14.7 | 14.7 | 15.4 | 15.0 | 15.1 |

*Table 9b:* WVTR for different pH and curing temperatures

|  | pH 2 | pH 3 | pH 4 | pH 5 | pH 6.5 |
|---|---|---|---|---|---|
| T °C | WVTR | WVTR | WVTR | WVTR | WVTR |
| 70 | 28.7 | 26.2 | 25.5 | 27.1 | 41.4 |
| 105 | 25.8 | 22.5 | 20.3 | 20.3 | 33.3 |
| 150 | 20.0 | 17.9 | 15.6 | 17.6 | 30.1 |

Example 10 Effect of catalysts

This example shows how the addition of catalysts affects the WVTR for coated paper.

A starch solution containing 30 pph CA was used. Two different potential catalysts were added: i) Magnesium hydroxide, Mg(OH)$_2$, added at an amount of 2,8 pph, ii) monosodiumphosphate, added at an amount of 15 pph. The pH was adjusted to 4 by 40 wt % NaOH. The solids content was approximately 35%. The solutions were draw-down coated on Nordic Paper Super Perga 50 g/m$^2$ and the total coat weight was about 13g/m$^2$. Table 10 shows the resulting WVTR. The example demonstrates that addition of a catalyst has the potential to improve the barrier properties, presumably due to enhanced cross-linking.

*Table 10:* WVTR for coated paper with different catalysts or without catalyst

| Sample | WVTR, g/m$^2$/24 h |
|---|---|
| Without catalyst | 19 |
| Monosodiumphosphate | 13 |
| Magnesium hydroxide | 14 |

Example 11 Effect of de-foamers

This example shows how addition of different de-foamers affects the WVTR of coated paper.

A starch solution containing 30 pph citric acid was used. Three different types of commercial de-foamers (BIM Kemi, Sweden) were added at a concentration of 0.05% by weight to the solution. The pH was adjusted to 4 with 40 wt % NaOH. The solutions, solids content about 35 wt % were draw-down coated on on Nordic Paper Super Perga 50 g/m$^2$. The total coat weight was about 13 g/m$^2$. Table 11 shows the WVTR as an effect of addition of a de-foamer. The example demonstrates that addition of a de-foamer, whose function is to reduce the amount of foam in a coating color, has the potential to improve the barrier properties.

Table 11: WVTR for coated paper with different de-foamers or without de-foamer

| Sample | WVTR, g/m$^2$/24 h |
|---|---|
| No de-foamer | 19 |
| De-foamer 1 | 15 |
| De-foamer 2 | 15 |
| De-foamer 3 | 16 |

Example 12: Effect of a platy kaolin filler

This example shows how the addition of a platy clay affects the WVTR of coated paper.

A starch solution containing 30 pph citric acid was used. A kaolin filler with highly platy particles (Barrisurf LX, Imerys) was added at concentrations of 25, 50, and 75 pph. The pH was adjusted to 4 with 40 wt % NaOH. The solids content was about 40%. Coatings were applied on Nordic Paper Super Perga 50 g/m$^2$. The total coat weight was about 15 g/m$^2$.

Table 12 shows the resulting WVTR. The example demonstrates that increasing addition of a platy kaolin filler has the potential to reduce the WVTR.

Table 12: WVTR for coated paper with different amount of platy kaolin

| Sample | WVTR, g/m$^2$/24 h |
|---|---|
| No kaolin | 18 |
| 25 pph kaolin | 22 |
| 50 pph kaolin | 13 |
| 75 pph kaolin | 9 |

Example 13: Effect of a platy kaolin filler and a nanosized clay filler

This example shows how different clays in combination affects the WVTR for different coated paper.

A starch solution containing 30 pph CA was used. The pH was adjusted to 4 with 40 wt % NaOH. A kaolin filler with highly platy particles (Barrisurf LX, Imerys) was added at concentrations of 34 to 104 pph. A nanosized clay filler (Cloisite Na+, Southern Clay Products Inc.) was added at concentrations ranging from 0 to 9 pph. The solids content in the dispersions was about 40-45%. Coatings were applied on a paper substrate (Billerud Machine Glaze 50g/m$^2$) at a coat weight of approximately 17g/m$^2$. The resulting WVTR values are presented in Table 13. The example demonstrates that addition of a highly platy kaolin filler strongly reduces the WVTR compared to an unfilled coating and that the WVTR decreases with increased amount of kaolin. Addition of mixtures of kaolin clay and the nanosized clay to the coating formulation reduced WVTR of the coated product compared to coatings without fillers (cf. Table 9b).

Table 13: WVTR for coated paper with different amount of clays

| Kaolin filler, pph | Nanosized clay, pph | WVTR, g/m$^2$/24 h |
|---|---|---|
| 34 | 0 | 8.8 |
| | 3 | 12.7 |
| | 6 | 11.0 |

(continued)

| Kaolin filler, pph | Nanosized clay, pph | WVTR, g/m²/24 h |
|---|---|---|
| | 9 | 13.0 |
| 51 | 0 | 8.3 |
| | 3 | 10.0 |
| | 6 | 10.3 |
| | 9 | 12.8 |
| 69 | 0 | 7.5 |
| | 3 | 11.6 |
| | 6 | 9.8 |
| | 9 | 13.7 |
| 87 | 0 | 7.6 |
| | 3 | 8.3 |
| | 6 | 9.2 |
| | 9 | 10.3 |
| 104 | 0 | 6.2 |
| | 3 | 7.4 |
| | 6 | 7.6 |
| | 9 | 10.5 |

Example 14: Effect of a platy kaolin filler on oxygen transmission rate

This example shows how the amount of platy kaolin clay affects the oxygen transmission rate (OTR) for coated paper.

A starch solution containing 30 pph citric acid was used. A kaolin filler with highly platy particles (Barrisurf LX, Imerys) was added at concentrations of 70, 87, 104 or 120 pph. The solids content was about 40%. Coatings were applied on Nordic Paper Super Perga 50 g/m². The oxygen transmission rate, OTR, was measured according to ASTM D3985-05 by a Mocon® OxTran® oxygen transmission rate tester, Model 2/21 (Mocon Inc., Minneapolis, MA, USA), at 23°C and 50% RH. The results shown in table 14 shows that the film without clay has a very good OTR and that addition of a platy kaolin clay further improves the barrier properties measured as OTR and this improvement is stable in the range of 70-120 pph of kaolin.

*Table 14:* OTR for coated paper with different amounts of platy kaolin

| Sample | OTR ml/m2 24h |
|---|---|
| No Kaolin | 5 |
| 70 pph | 2 |
| 87 pph | 2 |
| 104 pph | 2 |
| 120 pph | 2 |

Example 15

The example demonstrates that it is possible to attain water vapor barrier properties and grease resistance on pilot coated machine glazed paper Billerud MG, 50g/m². The coating consisted of Starch, 30 pph CA, 0,1 wt % defoamer, BIM 7640 pH adjusted with 40 wt % NaOH to pH 4. The solids content was between 40-45 %.

In Table 15, it is shown that it is mainly the kaolin filler that contributes to the barrier properties

*Table 15:* WVTR for pilot coated paper with different recipes

| Kaolin filler, pph | Nanosized clay, pph | WVTR, g/m$^2$/24 h |
|---|---|---|
| 87 | 0 | 16 |
|  | 3 | 34 |
| 104 | 3 | 22 |

In table 16, fat/grease resistance according to the Tappi standard methods is shown. TAPPI 454 measures the time in seconds required for a special oil to penetrate through the paper and TAPPI KIT measures resistance to 12 different solvents with increasing toughness on the paper, 0 is the lowest and 12 is the highest value. For the non-coated paper, the TAPPI 454 was 0 s and the TAPPI 559 was 0.

*Table 16:* TAPPI KIT and TAPPI fat resistance for pilot coated paper with different recipes

| Kaolin filler, pph | Nanosized clay, pph | Fat resistance TAPPI 454 (s) | KIT TAPPI 559 |
|---|---|---|---|
| 87 | 0 | 300 | 6 |
|  | 3 | 150 | 8 |
| 104 | 3 | 50 | 8 |

Example 16 Analysis of degree of di-esterification

This example shows the degree of di-esters on pilot coated paper.

The coating consisted of Starch, 30 pph CA, 0,1 wt % defoamer, BIM 7640 pH adjusted with 40 wt % NaOH to pH 4. The solids content was between 40-45 %. As substrate Nordic Paper Candor LF BC 70g/m$^2$ was used. The degree of di-esterification, defined as the fraction of the starch chains that are di-esterified is a measure of cross-linking on coatings applied on a pilot machine was studied by analyzing the degree of di-esterification by titration with copper (II) sulfate, the same method described in Example 1 but performed on coated paper instead of free films. The result demonstrated cross-linking of the coatings applied on the pilot machine showed a degree of di-esterification of 0.020 This can be compared with results obtained with free films containing 30pph citric acid at pH 4 :0.003 at 70 °C, 0.005 at 105 °C and 0.017 at 150 °C, as described in Example 1.

The present invention is not limited by the examples and embodiments described above, but may be varied within the scope of the appended claims. For instance, for the skilled person, it is evident that many methods of application, that are known per se may be used together with the concept, e.g. traditional blade coaters, rod coaters, size presses, spray coating, dip coating, curtain coating, extruding, melt pressing and lamination and different printing techniques. Further, it is evident that the inventive concept may be used for other purposes than described above, e.g. mechanical properties, antimicrobial properties, cross-linking construction materials. The scope of the invention is applicable to coated substrates in shape of a web, sheet or tray of fiber-based material preferably for use in food packaging industry, for example, where the improved barrier properties of the coating reduce the WVTR (Water Vapor Transmission Rate) and/or the OTR (Oxygen Transmission Rate), for example, and consequently preserve the packed food product for a longer period of time.

Test have shown that hot-pressing of a number of coated products produced according to the invention may form a construction material having very good strength properties and furthermore beneficial formability. It is foreseen that this specific use of the inventive concept may be made the subject of its own protection by means of a divisional application.

**Claims**

1. A method of making a coated product, comprising:

   a) providing a substrate (10) in shape of a web, sheet or tray of fiber-based material, preferably paper, paper board and/or similar lignocellulose material-based product;
   b) providing a coating material in form of biopolymer-containing aqueous dispersion or solution
   c) applying the coating material on the substrate to form a coating layer (11) thereon.
   d) cross-linking the coating material after it has been applied on the substrate (10) **characterized by**
   e) dissolving a biopolymer material in water to form the biopolymer-containing aqueous solution, said biopolymer material is a polysaccharide,

f) adding citric acid in the range between 5-50 pph in order to cross-link and/or plasticize the biopolymer,

g) adjusting the pH of the solution in order to reduce the molecular weight reduction due to hydrolysis.

h) Apply the coating onto the fiber substrate (10), to form said coating layer (11).

i) Simultaneously dry and cross-link the biopolymer material.

2. A method according to claim 1, wherein the range of citric acid added preferably is in between 14-50 pph, more preferred 15-40 pph and most preferred 20-40 pph.

3. A method according to claim 1, wherein the reduction of the molecular weight due to hydrolysis is limited to a decrease of less than 80 %, preferably less than 50% and most preferred less than 30 %.

4. A method according to claim 1, wherein the coating layer (11) when having a surface weight of 10 $g/m^2$ produces a coated paper which has a water vapor transmission rate (WVTR) lower than 20 $g/m^2$ 24h, preferably lower than 15 $g/m^2$ 24h, and most preferred 10 $g/m^2$ 24h or lower, and wherein the coated product (1) has an oxygen permeability of less than 10 $ml/m^2$ 24h, preferably in the range of 1-10 $ml/m^2$ 24h, and most preferred 1 $ml/m^2$ 24h or lower.

5. A method according to claim 1, wherein pH is adjusted by addition of suitable base which could be, but which is not limited to a citrate selected from the group consisting of mono-, di-, and trisodium citrate, and/or a base selected from the group consisting of NaOH, KOH, $Ca(OH)_2$, and $Mg(OH)_2$.

6. A method as claimed in claim 1, wherein the polysaccharide preferably is starch.

7. A method as claimed in claim 1, wherein at least one additive is included in the coating material, preferably said additive is a clay, said clay preferably having particles of nanodimensional thickness, or a curing catalyst, and wherein said additive preferably is added after the pH adjustment.

8. A method as claimed in claim 7, wherein the additive is an additional polymer, preferably PVOH, or an additional plasticizer, preferably Poly (ethylene glycol) and or Glycerol or a surface active agent with or without defoaming capacity.

9. A method as claimed in any one of claims 1-8, wherein the coating material is applied onto the substrate (10) by any type of industrial coating or printing method, wherein preferably a curing temperature below 110 °C is used, and more preferred a curing time of less than 20 seconds is being used.

10. A method as claimed in any one of claims 1-9, wherein there is no intermediary layer between the substrate (10) and the coating layer (11).

11. A method as claimed in any of claims 1-10, wherein said coating material is applied by curtain coating and wherein a non-ionic surfactant such as acetylated diols is added to said aqueous dispersion to reduce the surface tension at least 0,01 %, preferably in an amount between 0,05-0,2 %, based on the amount of water in the coating formulation.

**Patentansprüche**

1. Verfahren zur Erzeugung eines umhüllten Produkts umfassend:

a) Bereitstellen eines Substrats (10) in Form einer Bahn, eines Bogens oder einer Schale aus faserbasiertem Material, bevorzugt Papier, Papierkarton und/oder einem ähnlichen Produkt auf Basis von Lignocellulosematerial;

b) Bereitstellen eines Umhüllungsmaterials in Form einer Biopolymer beinhaltenden wässrigen Dispersion oder Lösung;

c) Aufbringen des Umhüllungsmaterials auf das Substrat, um eine Umhüllungsschicht (11) darauf zu bilden;

d) Quervernetzen des Umhüllungsmaterials, nachdem es auf das Substrat (10) aufgebracht wurde, **gekennzeichnet durch**

e) Lösen eines Biopolymermaterials in Wasser, um die Biopolymer beinhaltende wässrige Lösung zu bilden, wobei das Biopolymermaterial ein Polysaccharid ist,

f) Hinzufügen von Zitronensäure im Bereich zwischen 5-50 pph, um das Biopolymer querzuvernetzen und/oder zu plastifizieren,

g) Einstellen des pH-Werts der Lösung, um das Molekulargewichtverringerung aufgrund von Hydrolyse zu verringern,

h) Aufbringen der Umhüllung auf das Fasersubstrat (10), um die Umhüllungsschicht (11) zu bilden,

i) zeitgleiches Trocknen und Quervernetzen des Biopolymermaterials.

2. Verfahren nach Anspruch 1, wobei der Bereich von Zitronensäure, die hinzugefügt wird, bevorzugt zwischen 14-50 pph, bevorzugter 15-40 pph und am meisten bevorzugt 20-40 pph ist.

3. Verfahren nach Anspruch 1, wobei die Verringerung des Molekulargewichts aufgrund von Hydrolyse auf eine Abnahme von weniger als 80%, bevorzugt weniger als 50% und am meisten bevorzugt weniger als 30% begrenzt ist.

4. Verfahren nach Anspruch 1, wobei die Umhüllungsschicht (11), wenn sie ein Oberflächengewicht von 10 g/m$^2$ hat, ein umhülltes Papier erzeugt, das eine Wasserdampfdurchlässigkeitsrate (WVTR) von weniger als 20 g/m$^2$ 24h, bevorzugt weniger als 15 g/m$^2$ 24h und am meisten bevorzugt 10 g/m$^2$ 24h oder weniger hat und wobei das umhüllte Produkt (1) eine Sauerstoffdurchlässigkeit von weniger als 10 ml/m$^2$ 24h, bevorzugt im Bereich von 1-10 ml/m$^2$ 24h und am meisten bevorzugt 1 ml/m$^2$ 24h oder weniger hat.

5. Verfahren nach Anspruch 1, wobei der pH-Wert durch Zugabe einer geeigneten Base, die ein Citrat sein könnte, aber nicht darauf begrenzt ist, ausgewählt aus der Gruppe, bestehend aus Mono-, Di- und Trinatriumcitrat und/oder einer Base, ausgewählt aus der Gruppe, bestehend aus NaOH, KOH, Ca(OH)$_2$ und MG(OH)$_2$, eingestellt wird.

6. Verfahren nach Anspruch 1, wobei das Polysaccharid bevorzugt Stärke ist.

7. Verfahren nach Anspruch 1, wobei zumindest ein Additiv im Umhüllungsmaterial enthalten ist, bevorzugt das Additiv Ton, wobei der Ton bevorzugt Partikel von nanodimensionaler Dicke hat, oder ein Härtungskatalysator ist und wobei das Additiv bevorzugt nach der pH-Wert-Einstellung hinzugefügt wird.

8. Verfahren nach Anspruch 7, wobei das Additiv ein zusätzliches Polymer ist, bevorzugt PVOH, oder ein zusätzlicher Weichmacher, bevorzugt Poly(ethylenglycol) und/oder Glycerol oder ein oberflächenaktives Mittel mit oder ohne Entschäumungsfähigkeiten.

9. Verfahren nach einem der Ansprüche 1-8, wobei das Umhüllungsmaterial auf das Substrat (10) durch eine Art von industriellem Umhüllungs- oder Druckverfahren aufgebracht wird, wobei bevorzugt eine Härtungstemperatur unter 110°C verwendet wird und bevorzugter eine Härtungszeit von weniger als 20 Sekunden verwendet wird.

10. Verfahren nach einem der Ansprüche 1-9, wobei es keine Zwischenschicht zwischen dem Substrat (10) und der Umhüllungsschicht (11) gibt.

11. Verfahren nach einem der Ansprüche 1-10, wobei das Umhüllungsmaterial durch Vorhanggießen aufgebracht wird und wobei ein nicht-ionisches Tensid, wie acetylierte Diole, zur wässrigen Dispersion hinzugefügt wird, um die Oberflächenspannung zumindest um 0,01% zu verringern, bevorzugter in einer Menge zwischen 0,05-0,2%, basierend auf der Menge von Wasser in der Umhüllungsformulierung.

**Revendications**

1. Un procédé de fabrication d'un produit incluant un revêtement, comprenant :

a) le fait de prévoir un substrat (10) ayant la forme d'une bande, d'une feuille ou d'un plateau en un matériau à base de fibres, de préférence du papier, du carton et / ou un produit à base de matériau lignocellulosique similaire ;

b) le fait de prévoir un matériau de revêtement sous la forme d'une dispersion ou d'une solution aqueuse contenant un biopolymère,

c) le fait d'appliquer le matériau de revêtement sur le substrat pour former une couche de revêtement (11) sur celui-ci,

d) le fait de réticuler le matériau de revêtement après qu'il ait été appliqué sur le substrat (10), **caractérisé par**

e) le fait de dissoudre un matériau de biopolymère dans de l'eau pour former la solution aqueuse contenant un biopolymère, ledit matériau de biopolymère étant un polysaccharide,

f) le fait d'ajouter de l'acide citrique en une quantité comprise entre 5 et 50 pph afin de réticuler et / ou de plastifier le biopolymère,

g) le fait d'ajuster le pH de la solution afin de réduire la réduction du poids moléculaire due à l'hydrolyse,

h) le fait d'appliquer le revêtement sur le substrat de fibres (10), pour former ladite couche de revêtement (11),

i) le fait de sécher simultanément et de réticuler le matériau biopolymère.

2. Un procédé selon la revendication 1, dans lequel la quantité d'acide citrique ajoutée est de préférence comprise entre 14 et 50 pph, plus préférablement entre 15 et 40 pph et, de façon la plus préférée, entre 20 et 40 pph.

3. Un procédé selon la revendication 1, dans lequel la réduction du poids moléculaire due à l'hydrolyse est limitée à une diminution inférieure à 80%, de préférence inférieure à 50% et de façon la plus préférée inférieure à 30%.

4. Un procédé selon la revendication 1, dans lequel la couche de revêtement (11), lorsqu'elle a un grammage de 10g/m$^2$ produit un papier revêtu ayant un taux de transmission de vapeur d'eau (WVTR) inférieur à 20g/m$^2$ 24h, de préférence inférieur à 15g/m$^2$ 24h, et de façon la plus préférée inférieur à 10g/m$^2$ 24h ou moins, et dans lequel le produit revêtu (1) a une perméabilité à l'oxygène inférieure à 10ml/m$^2$ 24h, de préférence comprise entre 1 et 10 ml/m$^2$ 24h, et de façon la plus préférée, de 1ml/m$^2$ 24h ou moins.

5. Un procédé selon la revendication 1, dans lequel le pH est ajusté par addition d'une base appropriée qui pourrait être, mais sans que cela soit limitatif, un citrate choisi dans le groupe consistant en un citrate mono-, di- ou trisodique, et / ou une base choisie dans le groupe consistant en NaOH, KOH, Ca(OH)$_2$ et Mg(OH)$_2$.

6. Un procédé selon la revendication 1, dans lequel le polysaccharide est de préférence de l'amidon.

7. Un procédé selon la revendication 1, dans lequel au moins un additif est inclus dans le matériau de revêtement, de préférence ledit additif est une argile, ladite argile ayant de préférence des particules d'épaisseur nanométrique, ou un catalyseur de durcissement, et dans lequel ledit additif est ajouté après l'ajustement du pH.

8. Un procédé selon la revendication 7, dans lequel l'additif est un polymère supplémentaire, de préférence du PVOH, ou un plastifiant supplémentaire, de préférence du Poly (éthylène glycol) et / ou du Glycérol ou un agent tensioactif avec ou sans capacité démoussante.

9. Un procédé selon l'une quelconque des revendications 1 à 8, dans lequel le matériau de revêtement est appliqué sur le substrat (10) par n'importe quel type de procédé industriel de revêtement ou d'impression, dans lequel de préférence une température de durcissement inférieure à 110°C est utilisée, et plus préférablement un temps de durcissement inférieur à 20 secondes est utilisé.

10. Un procédé selon l'une quelconque des revendications 1 à 9, dans lequel il n'y a pas de couche intermédiaire entre le substrat (10) et la couche de revêtement (11).

11. Un procédé selon l'une quelconque des revendications 1 à 10, dans lequel ledit matériau de revêtement est appliqué par enduction en rideau et dans lequel un tensioactif non ionique tel que des diols acétylés est ajouté à ladite dispersion aqueuse pour réduire la tension superficielle d'au moins 0,01%, de préférence en une quantité comprise entre 0,05 et 0,2%, en fonction de la quantité d'eau présente dans la formulation de revêtement.

Figure 1

Figure 2

Figure 3

Figure 4

**WVTR ( 23°C 50% RH) for coated board as a function of Citric acid concentration not pH adjusted PC 155**

Figure 5

**WVTR Cup method 23°C 50% RH PC155**

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006025855 A
- US 2005208009 A
- WO 0159215 A1
- US 20100143738 A1

### Non-patent literature cited in the description

- **GHANBARZADE B ; ALMASI H ; ENTEZAMI A A.** Improving the barrier and mechanical properties of corn starch-based edible films; Effects of citric acid and carboxymethyl cellulose. *Industrial Crops and Products,* 2011, vol. 33, 229-235
- **EUGENE J. BLANCHARD ; ROBERT M. REINHARDT ; ELENA E. GRAVES ; B. A. KOTTES ANDREWS.** Dyeable Cross-Linked Cellulose from Low Formaldehyde and Non-Formaldehyde Finishing Systems?. *Ind. Eng. Chem. Res.,* 1994, vol. 33, 1030-1034
- **DANIEL F. CAUFIELD.** Ester crosslinking to improve wet performance of paper using multifunctional carboxylic acids, butanetetracarboxylic and citric acid. *Tappi Journal,* 1994, vol. 77 (3
- **B. A. KOTTES ANDREWS.** Chloroacetate Catalysis of Esterification Cross-Link Finishing of Cotton Fabrics for Durable Press. *Ind. Eng. Chem. Res.,* 1996, vol. 35, 2395-2398
- **CHARLES Q. YANG ; YUFENG XU ; DENGJIN WANG.** FTIR Spectroscopy Study of the polycarboxylic acids used for Paper wet strength improvement. *Ind. Eng. Chem. Res.,* 1996, vol. 35, 4037-4042
- **YU JIUGAO ; WANG NING ; MA XIAOFEI.** The Effects of Citric Acid on the Properties of Thermoplastic Starch Plasticized by Glycerol. *Starch/Stärke,* 2005, vol. 57, 494-504
- **RUI SHI ; ZIZHENG ZHANG ; QUANYONG LIU ; YANMING HAN ; LIQUN ZHANG ; DAFU CHEN ; WEI TIAN.** Characterization of citric acid/glycerol co-plasticized thermoplastic starch prepared by melt blending. *Carbohydrate Polymers,* 2007, vol. 69, 748-755
- **NARENDRA REDDY ; YIQI YANG.** Citric acid cross-linking of starch films. *Food Chemistry,* 2010, vol. 118, 702-711
- **T. YAMADA ; Y. MORIMOTO ; M. HISAMATSU, TSU.** Effect of Citric Acid on Potato Starch Gelatinization. *starch/starke,* 1986, vol. 38 (8), 264-268

- **MADOKA HIRASHIMA ; RHEO TAKAHSHI ; KATSUYOSHI NISHINARI.** Effects of Citric Acid on the Viscoelasticity of Cornstarch Pastes. *J. Agric. Food Chem.,* 2004, vol. 52, 2929-2933
- **CHRISTIAN SEIDEL ; WERNER-MICHAEL KULICKE ; CHRISTOPH HEß ; BRIGITTE HARTMANN ; M. DIETER LECHNER ; WALDEMAR LAZIK.** Influence of the cross-linking agent on the gel structure of Starch Derivates. *Starch/Stärke,* 2001, vol. 53, 305-310
- **RUI SHI ; JINGLIANG BI ; ZIZHENG ZHANG ; AICHEN ZHU ; DAFU CHEN ; XINHUA ZHOU ; LIQUN ZHANG ; WEI TIAN.** The effect of citric acid on the structural properties and cytotoxicity of the polyvinyl alcohol/Starch films when molding at high temperature. *Carbohydrate Polymers,* 2008, vol. 74, 763-770
- **ROBERT E. WING.** Starch Citrate: Preparation and Ion Exchange properties. *Starch/Starke,* 1996, vol. 48 (7/8), 275-279
- **BEATRIX WEPNER ; EMMERICH BERGHOFER ; ELLA MIESENBERGER ; KARL TIEFENBACHER ; KORNEUBURG, PERRY N. K. NG.** Citrate starch - Application as resistant starch in different food applications. *Starch/Stärke,* 1999, vol. 51 (10), 354-361
- **XUEJU (SHERRY) XIE ; QIANG LIU.** Development and Physicochemical Characterization of New Resistant Citrate Starch from Different Corn Starches. *Starch/Stärke,* 2004, vol. 56, 364-370
- **V. COMA ; I. SEBTIA ; P. PARDON ; F.H. PICHAVANT.** A. Deschamps Film properties from cross-linking of cellulosic derivates with a polyfuncional carboxylic acid. *Carbohydrate Polymers,* 2003, vol. 51, 265-271
- **FA-XING LUO ; QIANG HUANG ; XIONG FU ; LE-XING ZHANG ; SHU-JUAN YU.** Preparation and characterisation of crosslinked waxy potato starch. *Food Chemistry,* 2009, vol. 115, 563-568
- **GRAFFMANN ; DOMELS ; STRÄTER.** *Bestimmung von Citrat in Wasch- und Reinigungsmitteln durch Titration mit Cu-Lösung. Fette, Seifen, Anstrichmittel,* 1974, vol. 76 (5), 218-220

• **KLAUSHOFER ; BERGHOFER ; PIEBER.** Stärkecitrate - Produktion und anwendungs-technische Eigenschaften. *Starch - Stärke,* 1979, vol. 30 (2), 47-51

• **KLAUSHOFER, BLEIER.** Versuche zur Aufklärung der Struktur von Citratstärken. 3. Mitteilung. Ergebnisse von Abbauversuchen mit amylolytischen Enzymen. *Starch - Stärke,* 1983, vol. 35 (7), 237-242

• **L. GODBILLOT ; P. DOLE ; C. JOLY ; B. ROGE ; M. MATHLOUTHI.** Analysis of water binding in starch plasticized films. *Food Chemistry,* 2006, vol. 96, 380-386